# EUROPÄISCHE PATENTANMELDUNG

(11) **EP 4 289 653 A1**
(43) Veröffentlichungstag der Anmeldung: **13.12.2023**
(21) Anmeldenummer: 22177796.4
(22) Anmeldetag: 08.06.2022
(51) Int. Cl.: B60L 3/04, B60L 5/18

(54) **SCHIENENFAHRZEUG, VERFAHREN ZUR SICHERUNG EINES ÜBERGANGES EINES SCHIENENFAHRZEUGES SOWIE VERWENDUNG EINER SCHMELZSICHERUNG ZUR ABSICHERUNG EINER HOCHSPANNUNGSLEITUNG**

(71) Anmelder: Stadler Rail AG, 9565 Bussnang (CH)
(72) Erfinder: Schmid, Kuno, 8400 Winterthur (CH)
(74) Vertreter: Hepp Wenger Ryffel AG

(57) **Zusammenfassung**

Ein Schienenfahrzeug (1), insbesondere ein Triebzug, umfasst zumindest zwei Wagen (2,3), wobei das Schienenfahrzeug (1) einen ersten Stromversorgungswagen (2) umfasst, der eine Stromversorgungseinheit (4), insbesondere einen Stromabnehmer, umfasst und einen benachbarten Wagen (3), der dem Stromversorgungswagen (2) benachbart ist. Eine Stromversorgungsleitung (5) verläuft vom Stromversorgungswagen (2) zu dem benachbarten Wagen (3). Die Stromversorgungsleitung (5) umfasst eine Sicherung (6), insbesondere eine Schmelzsicherung.

## Beschreibung

Die Erfindung richtet sich auf ein Schienenfahrzeug, ein Verfahren zur Sicherung eines Überganges eines Schienenfahrzeuges sowie die Verwendung einer Schmelzsicherung zur Absicherung einer Hochspannungsleitung.

Bei Zügen die eine von einem ersten Wagen auf einen zweiten Wagen übergehend eine Hochspannungsleitung aufweisen, ist es notwendig, diesen Wagenübergang abzusichern. Üblicherweise wird eine derartige Absicherung durch Haupt- und/oder Trennschalter erzielt. Eine derartige Vorrichtung ist beispielsweise in der WO 2013/160135 gezeigt.

Nachteilig an einer derartigen Ausgestaltung ist, dass viele teure, komplexe und voluminöse Schalter vorgesehen sind, die unter anderem dazu dienen den Übergang zu sichern.

Es ist daher die Aufgabe der Erfindung die Nachteile des Standes der Technik zu vermeiden, und insbesondere ein Schienenfahrzeug sowie ein Verfahren zur Absicherung eines Überganges zu schaffen, welche einfach, sicher und effizient sind.

Die Lösung wird durch ein Schienenfahrzeug, ein Verfahren sowie eine Verwendung gemäss den unabhängigen Ansprüchen gelöst.

Insbesondere wird die Aufgabe durch ein Schienenfahrzeug, insbesondere einen Triebzug, gelöst, welches zumindest zwei Wagen umfasst. Das Schienenfahrzeug umfasst einen ersten Stromversorgungswagen, der eine Stromversorgungseinheit, insbesondere einen Stromabnehmer, aufweist. Das Schienenfahrzeug umfasst einen benachbarten Wagen, der dem Stromversorgungswagen benachbart ist. Eine Stromversorgungsleitung verläuft vom Stromversorgungswagen zu dem benachbarten Wagen. Die Stromversorgungsleitung umfasst eine Sicherung, insbesondere eine Schmelzsicherung.

Ein derartiges Schienenfahrzeug erlaubt das Abtrennen des benachbarten Wagens vom Stromversorgungswagen in Falle eines Kurzschlusses auf effiziente und einfache Weise.

Insbesondere verläuft die Stromversorgungsleitung von der Stromversorgungseinheit in den benachbarten Wagen.

Besonders vorteilhaft ist die Ausbildung der Erfindung bei Triebzügen, da in diesen Zügen üblicherweise Hochspannung in mehreren Wagen benötigt wird, da der Antrieb verteilt ausgebildet ist. Die Sicherung kann auf dem Stromversorgungswagen angeordnet sein.

Bevorzugt umfasst die Stromversorgungsleitung keine Schalter. Folglich gibt es eine direkte Verbindung von der Stromversorgungseinheit zum benachbarten Wagen, welche ausschliesslich durch die Sicherung unterbrechbar ist.

Somit entfällt jegliche Art von Schalter und es entsteht eine kostengünstige, sichere Möglichkeit Hochspannung vom ersten auf den benachbarten Wagen zu übertragen.

Der Stromversorgungswagen und/oder der benachbarte Wagen kann eine Verzweigungsleitung umfassen, die von der Stromversorgungseinheit zu einem Verbraucher in dem Stromversorgungswagen und/oder zu einem Verbraucher in dem benachbarten Wagen und/oder zu einem Verbraucher in einem weiteren Wagen führt.

Die Verzweigungsleitung kann mit der Stromversorgungseinheit verbunden sein. Die Verzweigungsleitung kann auch durch die Stromversorgungsleitung mit der Stromversorgungseinheit verbunden sein. Die Verzweigungsleitung kann in dem Stromversorgungswagen von der Stromversorgungseinheit zu einem Verbraucher verlaufen. Die Verzweigungsleitung kann auch in dem Stromversorgungswagen von der Stromversorgungsleitung zu einem Verbraucher verlaufen. Auf jedem anderen Wagen kann die Verzweigungsleitung von der Stromversorgungsleitung zu einem Verbraucher verlaufen. Es ist auch möglich, dass sich die Stromversorgungsleitung und die Verzweigungsleitung überschneiden.

Somit kann der Stromversorgungswagen auch selber die Energie verwenden, die durch die Stromversorgungseinheit in das Schienenfahrzeug eingeführt wird.

Verbraucher sind im Wesentlichen die Traktionskomponenten des Zuges. Der Verbraucher kann beispielsweise ein Fahrmotor sein, der über Transformator und Stromrichter durch die Stromversorgungseinheit mit Energie versorgt wird. Selbstverständlich sind auch alternative und zusätzliche andere Verbraucher denkbar.

Die Verzweigungsleitung kann von der Stromversorgungsleitung abgezweigt sein. Eine solche Verzweigungsleitung kann im Stromversorgungswagen und/oder im benachbarten Wagen und /oder in einem weiteren Wagen angeordnet sein und zu Verbrauchern in diesem Wagen führen. Es können mehrere Verzweigungsleitungen, welche von der Stromversorgungsleitung abzweigen, vorgesehen sein. Es ist somit möglich, dass die Stromversorgungsleitung von der Stromversorgungseinheit des Stromversorgungswagens über einen oder mehrere Wagen führt und von der Stromversorgungsleitung bei einem oder mehreren Wagen eine Verzweigungsleitung von der Stromversorgungsleitung zu einem oder mehreren Verbrauchern führt. Somit sind eine Versorgung der Verbraucher im Stromversorgungswagen und in den anderen Wagen des Zuges sicher möglich.

Die Verzweigungsleitung oder die Verzweigungsleitungen können jeweils einen Schalter, insbesondere einen Hauptschalter, umfassen.

Somit kann der Verbraucher von der Hochspannungsleitung getrennt werden. Bevorzugt kann die Verbindung von der Verzweigungsleitung zur Stromversorgungseinheit somit auch wieder geschlossen werden.

Dies ermöglicht ein wahlweises Ab- und Zuschalten der Verbraucher.

Bei dem Schalter kann es sich um einen Trenn- oder um einen Hauptschalter handeln. Vorteilhafterweise handelt es sich um einen Hauptschalter, da dieser auch unter Last geschaltet werden kann.

Der Stromversorgungswagen kann zwei erste benachbarte Wagen aufweisen und er kann je eine Sicherung in der Stromversorgungsleitung pro Wagenübergang umfassen.

Somit sind die Wagenübergänge des Stromversorgungswagens sicher abtrennbar.

Das Schienenfahrzeug kann einen zweiten Stromversorgungswagen umfassen, der eine zweite Stromversorgungseinheit, insbesondere einen Stromabnehmer, umfasst. Das Schienenfahrzeug kann weiterhin einen oder zwei zweite benachbarte Wagen umfassen, der oder die dem zweiten Stromversorgungswagen benachbart ist.

Eine zweite Stromversorgungsleitung verläuft vom zweiten Stromversorgungswagen zu dem zweiten benachbarten Wagen, wobei die zweite Stromversorgungsleitung eine zweite Sicherung, insbesondere eine Schmelzsicherung, umfasst.

Es ist möglich, dass die erste Stromversorgungsleitung und die zweite Stromversorgungsleitung miteinander verbunden sind. Dann ergibt sich aus der ersten Stromversorgungsleitung und der zweiten Stromversorgungsleitung eine verbundene Stromversorgungleitung, die über eine Vielzahl von Wagen verläuft. Die verbundene Stromversorgungsleitung kann über das gesamte Schienenfahrzeug verlaufen und somit jeden Wagen des Zuges mit Strom versorgen. Die verbundene Stromversorgungsleitung kann als AC-Hochspannungsleitung ausgebildet sein. Es ist möglich, dass der erste Stromversorgungswagen mehrere Stromversorgungseinheiten umfasst, die mit der ersten Stromversorgungsleitung verbunden sind. Es ist auch möglich, dass der zweite Stromversorgungswagen mehrere Stromversorgungseinheiten umfasst, die mit der zweiten Stromversorgungsleitung verbunden sind. Somit kann eine verbundene Stromversorgungsleitung ausgebildet sein, die an eine Vielzahl von Stromversorgungseinheiten angeschlossen ist, welche auf einer Vielzahl von Wagen angeordnet sind.

Der zweite Stromversorgungswagen ist analog zu dem ersten Stromversorgungswagen ausgebildet und kann daher sämtliche Merkmale umfassen, die bisher bezüglich des ersten Stromversorgungswagens beschrieben worden sind.

Bei der ersten Stromversorgungsleitung und/oder bei der zweiten Stromversorgungsleitung kann es sich um eine AC-Hochspannungsleitung (Wechselstrom-Hochspannungsleitung) handeln. Die AC-Hochspannungsleitung kann mit Fahrdrahtspannung beaufschlagbar sein. Die AC-Hochspannungsleitung kann mit 15kV und/ oder mit 25 kV beaufschlagbar sein.

Durch eine solche Hochspannungsleitung kann elektrische Energie verlustarm und einfach transportiert werden. Durch die Beaufschlagbarkeit der AC-Hochspannungsleitung mit 15 kV bzw. 25 kV kann die übliche Spannung des Fahrdrahtes direkt weitergeleitet werden.

Bei dem Schienenfahrzeug kann der erste Stromversorgungswagen und/oder der zweite Stromversorgungswagen jeweils zwei benachbarte Wagen aufweisen. Von dem ersten Stromversorgungswagen und/oder dem zweiten Stromversorgungswagen können jeweils Stromversorgungsleitungen zu den beiden jeweils benachbarten Wagen verlaufen. In beiden Stromversorgungsleitungen kann eine Sicherung angeordnet sein. Die Sicherungen können insbesondere auf dem ersten Stromversorgungswagen und/oder dem zweiten Stromversorgungswagen angeordnet sein.

Durch diese Anordnung ist jede Stromleitung, welche von dem Stromversorgungswagen zu den benachbarten Wagen führt, durch eine Sicherung geschützt.

Bei dem ersten Stromversorgungswagen und/oder bei dem zweiten Stromversorgungswagen kann es sich um einen Mittelwagen handeln. Der Mittelwagen kann ohne Traktionsantrieb ausgestattet sein. Bei dem ersten benachbarten Wagen und/oder dem zweiten benachbarten Wagen kann es sich um einen traktionsgetriebenen Endwagen handeln. Alternativ kann es sich um einen nicht angetriebenen Mittelwagen oder einen weiteren Stromversorgungswagen handeln.

An jedem Wagenende des Stromversorgungswagens kann eine Stromversorgungsleitung vom Stromversorgungswagen zu dem jeweiligen benachbarten Wagen führen und es kann je eine Sicherung zur Absicherung des jeweiligen Wagenübergangs auf dem Stromversorgungswagen vorgesehen sein.

Durch eine derartige Anordnung können die Bauteile (Stromabnehmer/ Transformatoren/ Traktionsausrüstung) verteilt über mehrere Wagen angeordnet werden und die Wagen können aufgrund der günstigen Gewichtsverteilung vorteilhaft dimensioniert werden.

Die erste Stromversorgungsleitung kann mit der zweiten Stromversorgungsleitung verbunden sein, sodass sie eine AC-Hochspannungsleitung bilden, die insbesondere über das gesamte Schienenfahrzeug verläuft. Eine derartige Konfiguration ermöglicht eine Stromversorgung des gesamten Zuges über die erste Stromversorgungseinheit und/oder die zweite Stromversorgungseinheit. Somit wird die Ausfallsicherheit erhöht.

Der zweite Stromversorgungswagen kann eine zweite Verzweigungsleitung umfassen, die von der zweiten Stromversorgungseinheit zu einem Verbraucher in dem zweiten Stromversorgungswagen führt.

Somit kann der zweite Stromversorgungswagen ebenfalls selbstständig mit Energie versorgt werden.

Die zweite Verzweigungsleitung kann von der zweiten Stromversorgungsleitung abgezweigt sein. Somit entfällt die Notwendigkeit von Schaltern in der Stromversorgungsleitung.

Die zweite Verzweigungsleitung kann einen zweiten Schalter, insbesondere einen Hauptschalter umfassen. Somit kann die zweite Verzweigungsleitung von der Stromversorgungseinheit getrennt werden und der Strom vom zweiten Stromversorgungswagen ausschliesslich in den zweiten benachbarten Wagen geführt werden. Das Schienenfahrzeug kann einen oder mehrere Mittelwagen umfassen, die an den ersten benachbarten und insbesondere auch an dem zweiten benachbarten Wagen angekoppelt sind. Somit kann ein Schienenfahrzeug mit auf die Bedürfnisse angepassten Anzahl Wagen und somit Sitzplätzen geschaffen werden.

Insbesondere umfasst das Schienenfahrzeug als 6-teiliges Fahrzeug einen ersten angetriebenen Endwagen, einen ersten benachbarten Wagen, einen ersten Stromversorgungswagen, bevorzugt mit zwei Stromversorgungseinheiten, einen zweiten benachbarten Wagen, einen Mittelwagen sowie einen zweiten angetriebenen Endwagen, in dieser Reihenfolge.

Alternativ kann das Schienenfahrzeug als 4-teiliges Fahrzeug einen ersten angetriebenen Endwagen, einen ersten benachbarten Wagen, einen ersten Stromversorgungswagen, bevorzugt mit zwei Stromversorgungseinheiten, sowie einen zweiten angetriebenen Endwagen als zweiten benachbarten Wagen umfassen, in dieser Reihenfolge.

Die Traktionskette ist bevorzugt derart gestaltet, dass das Fahrzeug auch bei Auslösen einer Sicherung noch mit verminderter Leistung weiter betrieben werden kann. Dazu können alle benötigten Komponenten der Traktionskette redundant vorhanden sein. Ausserdem können alle benötigten Komponenten der Traktionskette jeweils in unterschiedlichen Strängen der Stromversorgungsleitung angeordnet sein. Unterschiedliche Stränge der Stromversorgungsleitung sind voneinander abtrennbare Stränge, die weiterhin zu einem funktionsfähigen Schienenfahrzeug führen.

Die Aufgabe wird weiterhin durch ein Verfahren zur Sicherung eines Überganges eines Schienenfahrzeuges wie vorhergehend beschrieben gelöst. Der Übergang ist zwischen dem Stromversorgungswagen und dem oder den benachbarten Wagen angeordnet. Die Stromversorgungsleitung umfasst eine Sicherung, insbesondere eine Schmelzsicherung, bevorzugt eine Sicherung pro Übergang zu einem benachbarten Wagen, die bei einem unerwünschten Zustand, insbesondere einem Kurzschluss, die Stromzufuhr zu dem oder den benachbarten Wagen unterbricht.

Somit kann auf einfache und günstige Weise ein Übergang zwischen zwei Wagen abgesichert werden.

Die Aufgabe wird weiterhin durch die Verwendung einer Schmelzsicherung zur Absicherung einer Hochspannungsleitung von einem Stromversorgungswagen zu einem benachbarten Wagen eines Triebzuges gelöst.

Als Hochspannung wird gemäss der vorliegenden Erfindung die übliche Spannung in den elektrifizierten Fahrleitung verstanden. Diese kann sich in den einzelnen Ländern jedoch unterscheiden. Sie liegt üblicherweise bei 15kV oder 25kV.

Eine geeignete Hochspannungs-Schmelzsicherung ist bevorzugt aus Kupfer hergestellt und weist einen Querschnitt im Bereich von im Wesentlichen 10 - 50 mm² auf. Die Hochspannungs-Schmelzsicherung kann einen Querschnitt von im Wesentlichen 16mm² aufweisen. Der Draht kann Stromstärken bis 250 A leiten, ohne zu schmelzen. Der Draht kann auch Stromstärken bis 300 A leiten, ohne zu schmelzen.

Die Erfindung wird im Folgenden in Ausführungsbeispielen anhand von Figuren näher erläutert. Hierbei zeigt:
- Figur 1:: Einen erfindungsgemässen Stromversorgungswagen und benachbarten Wagen,
- Figur 2:: einen Triebzug mit einem ersten und einem zweiten Stromversorgungswagen sowie einer Mehrzahl von Mittelwagen,
- Figur 3:: eine schematische Darstellung einer Schmelzsicherung,
- Figur 4:: einen Triebzug mit einem traktionslosen Mittelwagen als Stromversorgungswagen und einem ersten benachbarten Wagen, welcher als traktionsgetriebener Endwagen ausgebildet ist,
- Figur 5:: ein Schienenfahrzeug mit zwei traktionsgetriebenen Endwagen und zwei traktionslosen Mittelwagen.

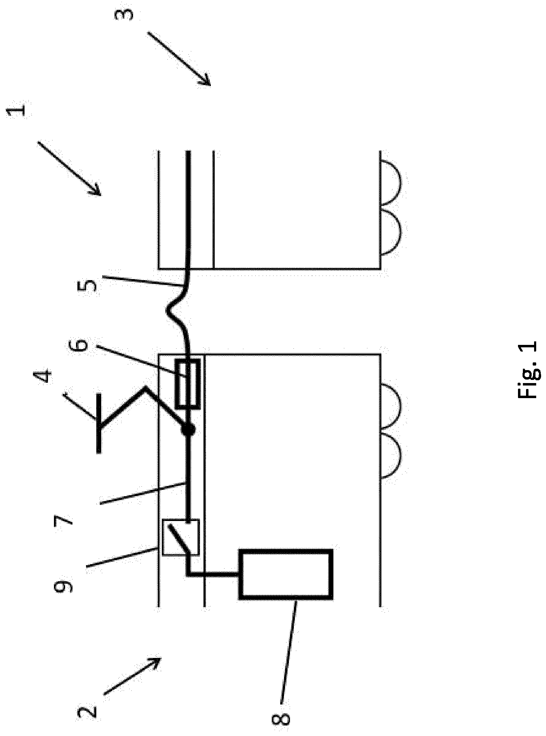

Figur 1 zeigt ein Schienenfahrzeug 1 umfassend einen Stromversorgungswagen 2 und einen benachbarten Wagen 3. Der Stromversorgungswagen 2 umfasst eine Stromversorgungseinheit 4 in Form eines Stromabnehmers. Der Stromabnehmer kontaktiert bei Benutzung den Hochspannungsdraht und führt so Energie in den ersten Stromversorgungswagen 2. Zwischen der Stromversorgungseinheit 4 und dem benachbarten Wagen 3 verläuft eine Stromversorgungsleitung 5. Die Stromversorgungsleitung 5 ist durch eine Sicherung 6 in Form einer Schmelzsicherung, im Falle eines Kurzschlusses von dem Stromversorgungswagen 2 trennbar ausgebildet. Des Weiteren ist eine Verzweigungsleitung 7 vorgesehen, die Verbraucher 8 im Stromversorgungswagen 2 versorgt. Die Verzweigungsleitung 7 umfasst einen Schalter 9, der bevorzugt als Hauptschalter ausgebildet ist. Der Nennstrom in der Dachleitung über die Wagenübergänge kann im Bereich von 140 Ampere liegen. In Abhängigkeit von der Leistung des Antriebs sind auch andere Nennströme in der Dachleitung über den Wagenübergängen möglich. Es ist auch möglich, dass im Normalbetrieb bei ungünstigen Verhältnissen bis zu 250 Ampere auftreten. Die Sicherung 6 trennt die Verbindung zwischen Stromversorgungswagen 2 und benachbartem Wagen 3 in diesen Normalzuständen nicht. Wenn ein Kurzschluss entsteht, bei dem Ströme deutlich über 250 Ampere auftreten, trennt die Sicherung die Verbindung zwischen Stromversorgungswagen 2 und benachbartem Wagen 3.

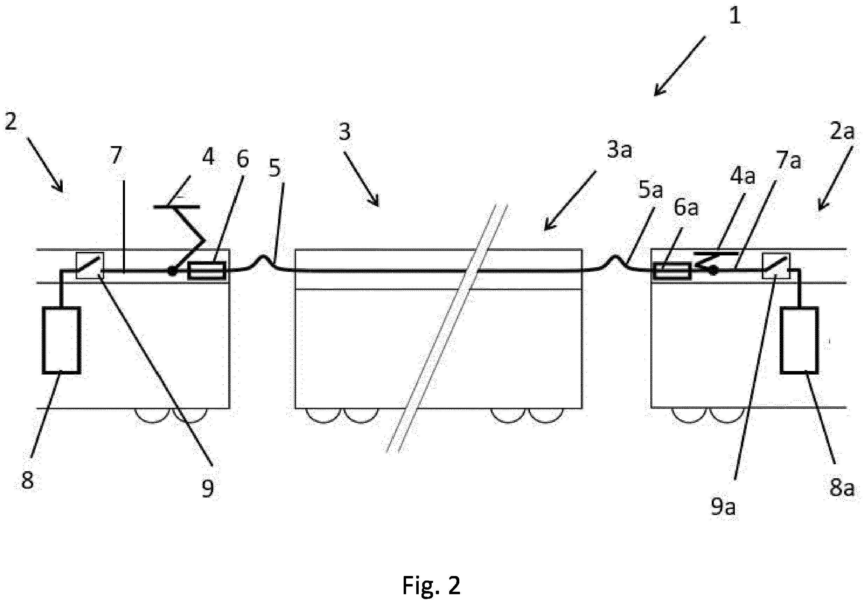

Figur 2 zeigt das Schienenfahrzeug 1 aus Figur 1 umfassend einen zweiten Stromversorgungswagen 2a. Der Stromversorgungswagen 2a entspricht der Ausführungsform aus Figur 1. Der Stromversorgungswagen 2a umfasst eine zweite Stromversorgungseinheit 4a, die in einem eingefahrenen Zustand dargestellt ist. Somit hat diese Stromversorgungseinheit 4a aktuell keinen Kontakt zu einer Energieversorgungsleitung und das Schienenfahrzeug wird durch den ersten Stromversorgungswagen 2 mit Energie versorgt. Von der zweiten Stromversorgungseinheit 4a verläuft die zweite Stromversorgungsleitung 5a zum zweiten benachbarten Wagen 3a. Die zweite Stromversorgungsleitung 5a umfasst eine zweite Sicherung 6a in Form einer Schmelzsicherung. Somit kann auch der zweite Stromversorgungswagen 2a von dem benachbarten Wagen 3a und somit von allen anderen Wagen des Schienenfahrzeuges 1 getrennt werden, sofern ein unerwünschtes Ereignis wie beispielsweise einen Kurzschluss auftritt. Der zweite Stromversorgungswagen 2a umfasst weiterhin eine zweite Verzweigungsleitung 7a, die über einen zweiten Schalter 9a mit einem Verbraucher 8a verbunden ist. Der zweite Schalter 9a ist ebenfalls bevorzugt ein Hauptschalter und somit unter Last schaltbar. Der Verbraucher 8a kann ein Transformator und/oder Stromrichter und/oder Motor und/oder Hilfsbetriebe sein. Zwischen dem benachbarten Wagen 3 und dem zweiten benachbarten Wagen 3a können Mittelwagen angeordnet sein.

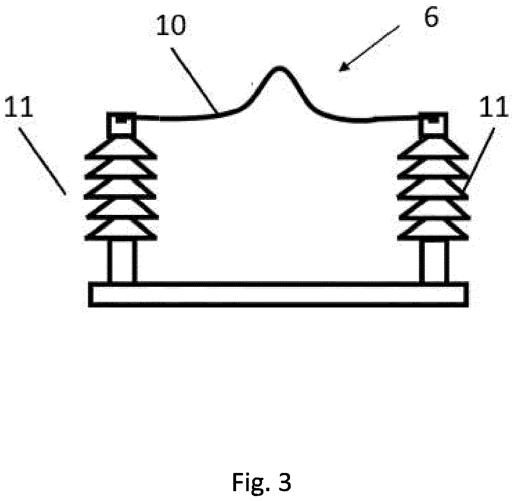

Figur 3 zeigt eine genauere Darstellung der Schmelzsicherung 6 (Analog zur Schmelzsicherung 6a). Die Schmelzsicherung 6, 6a umfasst zwei Isolatoren 11 und einen Schmelzdraht 10. Der Schmelzdraht ist aus Kupfer hergestellt und ist ein Flachmaterial mit einem Querschnitt von 10 bis 46 mm². Der optimale Querschnitt liegt im Wesentlichen bei 16 mm². Die Stromstärke bei dem der Schmelzdraht schmilzt, liegt bei über 250 Ampere.

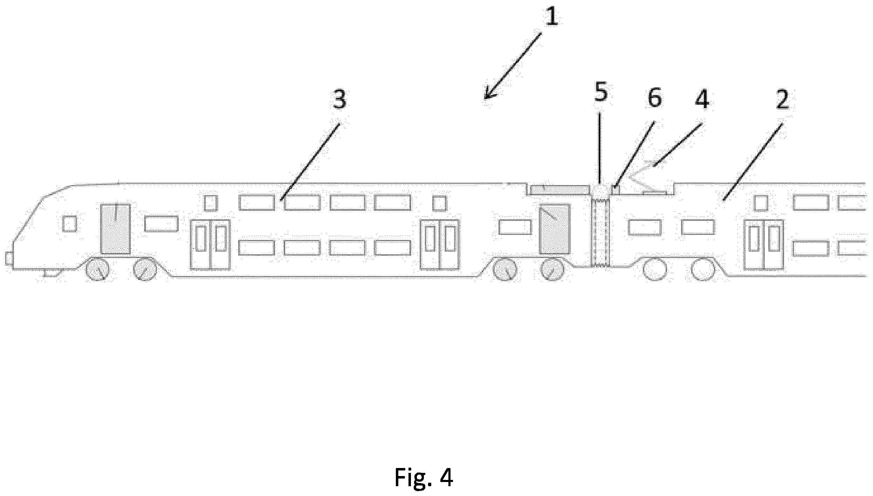

Figur 4 zeigt einen Triebzug mit einem traktionslosen Mittelwagen als Stromversorgungswagen 2 und einem ersten benachbarten Wagen 3, welcher als traktionsgetriebener Endwagen ausgebildet ist. Der erste Stromversorgungswagen 2 ist mit einer Stromversorgungseinheit 4 ausgestattet. Die Sicherung 6 ist auf dem Stromversorgungswagen 2 angeordnet. Die Stromversorgungsleitung 5 verbindet die Stromversorgungseinrichtung 4 des Stromversorgungswagens 2 mit Komponenten der Traktionsausrüstung auf dem benachbarten Wagen 3. Die elektrische Energie kann somit von einer Fahrleitung (nicht dargestellt) über den Stromabnehmer 4 des Stromversorgungswagens 2 durch die Sicherung 6 und die Stromversorgungsleitung 5 zu der Traktionsausrüstung (z.B. Transformator, Stromrichter, Fahrmotoren) und anderen Verbrauchern (nicht dargestellt) des benachbarten Wagens 3 gelangen.

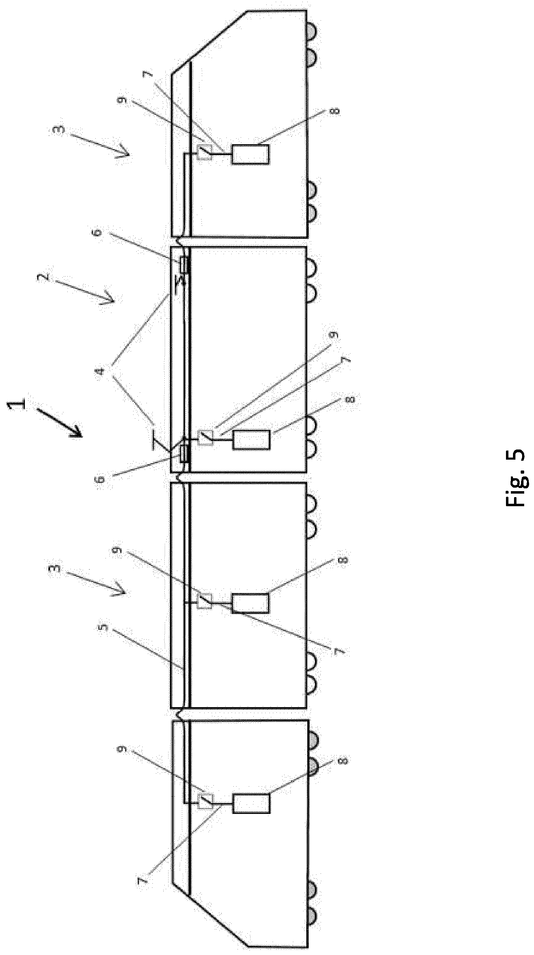

Figur 5 zeigt ein Schienenfahrzeug 1 mit zwei traktionsgetriebenen Endwagen und zwei traktionslosen Mittelwagen. Das Schienenfahrzeug 1 weist einen Stromversorgungswagen 2 auf. Der Stromversorgungswagen 2 hat zwei benachbarte Wagen 3. Ein benachbarter Wagen 3 des Stromversorgungswagens 2 ist ein traktionsloser Mittelwagen und ein benachbarter Wagen des Stromversorgungswagens 2 ist ein traktionsgetriebener Endwagen. Das Schienenfahrzeug 1 weist eine Stromversorgungsleitung 5 auf, welche von den zwei Stromversorgungseinheiten 4 des Stromversorgungswagens 2 zu jedem Wagen des Schienenfahrzeugs 1 führt. Auf dem Stromversorgungswagen 2 zweigt eine Verzweigungsleitung 7 von der Stromversorgungsleitung 5 zu den Verbrauchern 8 ab. In der Verzweigungsleitung befindet sich ein Schalter 9. Zwischen den beiden Stromversorgungseinheiten 4 und dem jeweiligen benachbarten Wagen 3 ist jeweils eine Sicherung 6 angeordnet. Auf jedem Wagen des Schienenfahrzeugs 1 führt eine Verzweigungsleitung 7 von der Stromversorgungsleitung 5 zu jeweils einem Verbraucher 8. In der Verzweigungsleitung 7 von jedem Wagen ist jeweils ein Schalter 9 angeordnet.

## Patentansprüche

1. Schienenfahrzeug (1), insbesondere Triebzug, umfassend zumindest zwei Wagen (2,3), wobei das Schienenfahrzeug (1) einen ersten Stromversorgungswagen (2) umfasst, der eine Stromversorgungseinheit (4), insbesondere einen Stromabnehmer, umfasst und einen benachbarten Wagen (3), der dem Stromversorgungswagen (2) benachbart ist, umfasst, wobei eine Stromversorgungsleitung (5) vom Stromversorgungswagen (2) zu dem benachbarten Wagen (3) verläuft, **dadurch gekennzeichnet, dass** die Stromversorgungsleitung (5) eine Sicherung (6), insbesondere eine Schmelzsicherung, umfasst.

2. Schienenfahrzeug (1) nach Anspruch 1, **dadurch gekennzeichnet, dass** die Stromversorgungsleitung (5) keine Schalter umfasst.

3. Schienenfahrzeug (1) nach einem der vorhergehenden Ansprüche, **dadurch gekennzeichnet, dass** der Stromversorgungswagen (2) und/oder der benachbarte Wagen (3) und/oder ein oder mehrere weitere Wagen eine oder mehrere Verzweigungsleitungen (7) umfasst, die von der Stromversorgungseinheit (4) zu einem Verbraucher (8) in dem Stromversorgungswagen (2) und/oder zu einem Verbraucher (8) in dem benachbarten Wagen (3)und/oder einem Verbraucher in einem oder mehreren weiteren Wagen führt.

4. Schienenfahrzeug (1) nach Anspruch 3, **dadurch gekennzeichnet, dass** die eine oder mehrere Verzweigungsleitungen (7) von der Stromversorgungsleitung (5) abgezweigt sind.

5. Schienenfahrzeug (1) nach einem der Ansprüche 3 oder 4, **dadurch gekennzeichnet, dass** die eine oder mehrere Verzweigungsleitungen (7) einen Schalter (9), insbesondere einen Hauptschalter, umfassen.

6. Schienenfahrzeug (1) nach einem der vorhergehenden Ansprüche, **dadurch gekennzeichnet, dass** das Schienenfahrzeug (1) einen zweiten Stromversorgungswagen (2a) umfasst, der eine zweite Stromversorgungseinheit (4a), insbesondere einen zweiten Stromabnehmer, umfasst und einen zweiten benachbarten Wagen (3a), der dem zweiten Stromversorgungswagen (2a) benachbart ist, umfasst, wobei eine zweite Stromversorgungsleitung (5a) vom zweiten Stromversorgungswagen (2a) zu dem zweiten benachbarten Wagen (3a) verläuft, wobei die zweite Stromversorgungsleitung (5a) eine zweite Sicherung (6a), insbesondere eine Schmelzsicherung, umfasst.

7. Schienenfahrzeug (1) nach Anspruch 6, wobei es sich bei der ersten Stromversorgungsleitung (5) und/ oder bei der zweiten Stromversorgungsleitung (5a) um eine AC-Hochspannungsleitung handelt, welche bevorzugt mit Fahrdrahtspannung, insbesondere mit 15 kV und/oder 25 kV, beaufschlagbar ist.

8. Schienenfahrzeug (1) nach einem der vorhergehenden Ansprüche, wobei der erste Stromversorgungswagen (2) und/oder der zweite Stromversorgungswagen (2a) jeweils zwei benachbarte Wagen (3, 3a) aufweisen, wobei von dem ersten Stromversorgungswagen (2) und/oder dem zweiten Stromversorgungswagen (2a) jeweils Stromversorgungsleitungen (5) zu den beiden jeweils benachbarten Wagen (3, 3a) verlaufen und in jeweils beiden Stromversorgungsleitungen (5) eine Sicherung (6) angeordnet ist, wobei die beiden Sicherungen insbesondere jeweils auf dem ersten Stromversorgungswagen und/oder dem zweiten Stromversorgungswagen angeordnet sind.

9. Schienenfahrzeug (1) nach einem der Ansprüche 6 bis 7, wobei es sich bei dem ersten Stromversorgungswagen (2) und/oder bei dem zweiten Stromversorgungswagen (2a) um einen Mittelwagen handelt, welcher bevorzugt ohne eigenen Traktionsantrieb ausgestattet ist, und es sich bei dem ersten benachbarten Wagen (3) und/oder bei dem zweiten benachbarten Wagen (3a) um einen traktionsgetriebenen Endwagen handelt.

10. Schienenfahrzeug (1) nach einem der Ansprüche 6 bis 9, wobei die erste Stromversorgungsleitung (5) mit der zweiten Stromversorgungsleitung (5a) verbunden ist, so dass sie eine AC-Hochspannungsleitung bilden, die insbesondere über das gesamte Schienenfahrzeug (1) verläuft.

11. Schienenfahrzeug (1) nach einem der vorhergehenden Ansprüche, **dadurch gekennzeichnet, dass** das Schienenfahrzeug (1) einen oder mehrere Mittelwagen umfasst, die an den ersten benachbarten Wagen (3) und insbesondere auch an den zweiten benachbarten Wagen (3a) angekoppelt sind.

12. Verfahren zur Sicherung eines Überganges eines Schienenfahrzeuges (1) gemäss einem der vorhergehenden Ansprüche, wobei der Übergang zwischen dem Stromversorgungswagen (2, 2a) und dem benachbarten Wagen (3, 3a) angeordnet ist, wobei die Stromversorgungsleitung (5, 5a) eine Sicherung (6, 6a), insbesondere eine Schmelzsicherung, umfasst, die bei einem unerwünschten Zustand, insbesondere einem Kurzschluss, die Stromzufuhr zu dem benachbarten Wagen (3, 3a) unterbricht.

13. Verwendung einer Schmelzsicherung (6) zur Absicherung einer Hochspannungsleitung von einem Stromversorgungswagen (2) zu einem benachbarten Wagen (3) eines Triebzuges.
